# EUROPEAN PATENT SPECIFICATION

(11) **EP 2 583 786 B1**
(45) Date of publication and mention of the grant of the patent: **16.04.2014**
(21) Application number: 11186003.7
(22) Date of filing: 20.10.2011
(51) Int. Cl.: B23Q 1/76, B24B 41/06

(54) **Steady rest**
Lünette
Lunette

(43) Date of publication of application: 24.04.2013
(73) Proprietor: Atlings Maskinfabrik AB, 816 31 Ockelbo (SE)
(72) Inventor: Forsling, Anders, 816 30 Ockelbo (SE)
(74) Representative: Börlin, Maria

(56) References cited:
- EP-A1- 0 074 639
- EP-A1- 2 058 084

## Description

### TECHNICAL FIELD

The present invention relates to a self-centring steady rest according to the preamble of claim 1.

### BACKGROUND

Steady rests are used for centring cylindrical work pieces in various working machines such as lathes or grinders for metal, wood or other materials. Steady rests are also used in measurement equipment. EP 0 074 639 A1 discloses an example of a prior art steady rest. A known self centring steady rest is described in WO 8701320. This conventional steady rest comprises two pivotal levers that are arranged to pivot towards a common centring point and a slide which is linearly displaceable towards the centring point. The pivotal levers comprise cams which are in engagement with cam followers in the form of rollers on the slide. In operation, the cams on the pivot levers and the cam followers on the slide couples the displacement of the slide to the pivot movement of the levers so that the contact points on levers and slide always are on the same radial distance from the centring point.

The known steady rest is provided with a so called "yawning" function which allows the upper pivot lever to swing upwards from its outermost working position to a further open release position from which work pieces easily can be loaded or unloaded from the steady rest.

The known steady rest has proven to be accurate and the variation in clamping force between the points of contact with the work piece is small. However, in the known steady rest the rear section of the upper lever is extended to provide the necessary leverage for the yawning function. This makes the overall dimensions of the steady rest large which is a disadvantage in the narrow environment around machining tools in modern workshops.

A further disadvantage with the known steady rest is that the levers are not constantly secured in working position during operation of the steady rest. If the work piece is removed from a steady rest, for example for measurements, there is a risk that the levers swing inwards either by their own weight or due to some external force, towards the centring point. The work piece can then not be put back into the steady rest without time consuming re-centring of the work piece in the steady rest.

Hence, an object of the present invention to provide a steady rest of the above type which has small dimensions.

A further object of the present invention is to provide a steady rest in which the levers always are secured against accidental pivoting.

### SUMMARY OF THE INVENTION

According to the invention, these objects are achieved by a self-centring steady rest comprising:
- a first and a second pivoting lever that are arranged in symmetry relative a plane A - A passing through a centring point B, wherein each pivoting lever is divided by a pivot point into a forward portion having a support means for contacting a work piece and a rear portion comprising a cam having a cam surface;
- a slide that is linearly displaceable in the plane A - A relative the centring point B, wherein said slide has a forward portion having a support means for contacting a work piece and a rear portion comprising cam followers;
- wherein said cams and said cam followers couples the displacement of the slide to the pivotal movement of the pivoting levers between a maximum working position C and a minimum working position D so that the support means on said pivoting levers and slide always are at the same radial distance from the centring point B; characterized in that at least one pivoting lever comprises a first guide groove wherein said at least one pivoting lever is coupled to the slide by a connection means which comprises a guide pin that is guided in said first guide groove, wherein said connection means and said first guide groove are designed such that said at least one pivoting lever is pivoted from the maximum working position C to a further open release position E when the slide is moved from a rear working position G to a rearmost release position H and such that said at least one pivoting lever is pivoted from said further open release position E to said maximum working position C when said slide is moved from the rearmost release position H to said rear working position G.

The inventive steady rest provides a secure and robust function for raising the upper lever so that work pieces easily can be removed from, or loaded into, the steady rest from above. Thanks to the guide groove in the rear portion of the lever in combination with the connection element which couples the linearly movement of the slide to the pivoting movement of the lever it is possible to achieve the increased opening of the steady rest with a relatively short pivoting lever. This since the rear portion of the pivoting lever only needs to be as long as the cam surface and no extra leverage extension is neccessary. This provides the advantage that the dimensions of the entire steady rest can be minimized.

The guide groove may be extended over the whole length of the cam surface in the rear section of the pivoting lever towards the pivot point. This achieves an effective blocking function since the guide pin prevents accidental inwards pivoting of the pivoting levers by engaging the guide groove.

Preferably, the guide grooves are formed in separate exchangeable pieces. The pieces may be manufactured in advance and can be removable attached to the levers. This provides for a flexible steady rest. The use of exchangeable pieces further reduces the manufacturing cost of the steady rest since only one type of lever need to be manufactured.

Preferably, the guide groove comprises a rear section which is adapted such that the guide pin is in engagement with the guided groove (when the slide is moved between said rear working position G and said rearmost release position H.

Preferably, the guide groove comprises a forward section which is adapted such that the guide pin follows the forward section without engaging the guide groove when the slide is moved between said rear working position G and a forward working position H.

According to an alternative, said second pivoting lever comprises a guide groove which is adapted such that the guide pin follows the guide groove without engaging the guide groove when the slide is moved between said rear working position G and a forward working position H.

According to an alternative, said second pivoting lever comprises a guide groove which comprises a rear section which is adapted such that when the the guide pin is in engagement with the rear section of the groove when the slide is moved between said rear working position G and a rearmost release position H.

The connection element is arranged such that, when the slide moved from said rear working position G to said rearmost release position H, the cam follower is distant from the rear end of said at least one pivoting lever to enable the rear portion of said at least one pivoting lever to pivot past said cam follower towards the slide.

Said steady rest may comprise at least one pre-manufactured piece, comprising a guide groove wherein said at least one pre-manufactured piece is attached to the pivoting lever.

Preferably, said at least one pre-manufactured piece is an insert , wherein said at least one pivoting lever comprises a recess adapted for receiving said insert.

According to an alternative said guide groove is formed directly into the said at least one pivoting levers.

The invention also relates to a pre-manufactured piece comprising a guide groove for a steady rest according to any of claims 1 - 10.

### DEFINITIONS

By "maximum working position" is in the present application meant the largest radial distance a lever can be from the centring point and simultaneous having the cams and the cam followers in operative engagement. When a lever of the steady rest is in a "maximum working position" the cam followers are in contact with the beginning of the cam surface in the very rear portion of the pivoting levers. The maximum working position sets the maximum diameter for a work piece that shall be centered.

By "minimum working position" is in the present application meant the smallest radial distance a lever can be from the centring point and simultaneous having the cams and the cam followers in operative engagement. When a lever of the steady rest is in a "minimum working position" the cam followers are in contact with the end of the cam surface in the very front end of the rear portion of the pivoting levers. The minimum working position sets the smallest diameter for a work piece that shall be centered.

By "further open release position" or "yawning position" is meant a position in which the radial distance between a lever and the centring point is greater than the radial distance between the lever and the centring point when the lever is in "maximum working position".

### DESCRIPTION OF DRAWINGS

Figure 1: A side view of a steady rest according to a first preferred embodiment of the invention in which the pivoting levers are in maximum working position.
Figure 2: A side view of a steady rest according to a first preferred embodiment of the invention in which the pivoting levers are in a position between the maximum and minimum working position.
Figure 3: A side view of a steady rest according to a first preferred embodiment of the invention in which the pivoting levers are in minimum working position.
Figure 4: A side view of a steady rest according to a first preferred embodiment of the invention in a position between the maximum working position and the further open release position.
Figure 5: A side view of a steady rest according to a first preferred embodiment of the invention in a further open release position.
Figure 6: An enlarged portion of the steady rest shown in figure 1.

### DESCRIPTION OF EMBODIMENTS

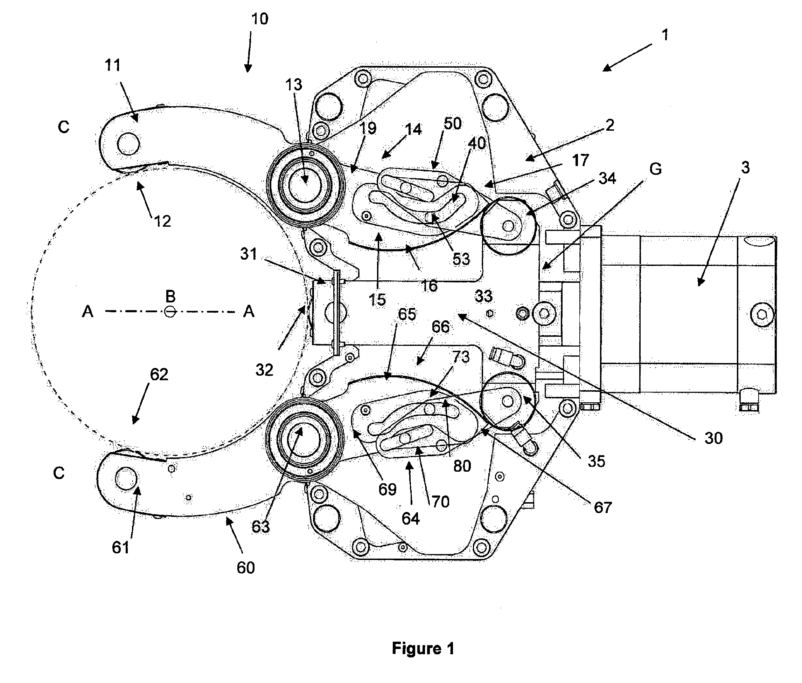

Figure 1 shows a steady rest 1 in a maximum working position. Figure 1 further shows schematically a work piece, e.g. a cylindrical elongated metal bar, indicated with a dashed circle. The steady rest comprises two pivoting levers 10, 60 that are arranged symmetrically relative a centre line A - A through the centring point B. The pivoting levers 10, 60 are pivotally arranged in the housing 2 of the steady rest by pivotal axis's 13, 63 so that the levers can swing towards and from the centring point B. The pivotal axis of each lever divides the pivoting levers 10, 60 in a forward portion 11, 61 having a rotatable support roller 12, 62 for contacting the work piece and a rear portion 14, 64. The steady rest further comprises a slide 30 which is linearly movable relative the centring point B by a hydraulic or pneumatic cylinder 3. The forward portion of the slide 30 that is directed towards the centring point B is provided with a rotatable support roller 32.

When a work piece is centred in the steady rest the contact points between the support rollers 12, 62, 32 are at the same radial distance from the centring point B in the centre of the work piece. To achieve this, the linear movement of the slide 30 is coupled to the pivoting movement of the levers 11, 61 so that the change in distance between the support rollers 12, 62 on the pivoting levers 10, 60 and the centring point B corresponds to the axial displacement of the slide 30.

For this purpose, the rear portion of the slide 30, that is directed away from the centring point B, is provided with cam followers 34, 35 in the form of rotatble rollers and the rear portion 14, 64 of each pivoting lever 10, 60 is provided with mirror imaged cams 15, 65. As is evident from figure 1 each of the cams 15, 65 has an arc shaped form with a cam surface 16, 66 facing the slide 30. The cam surface extends from the rear end 17, 67 of the rear portion 14, 64 of each pivoting lever 10, 60 to the front end 19, 69 thereof close to the pivot point 13, 63.

In operation, the cams on the levers cooperate with the cam followers on the slide in order to swing the levers through an angle which cooperates with the axial displacement of the slide. This is illustrated with reference to figures 1 - 3.

Figure 1 shows a situation in which the slide is in a rear working position G. When the slide is in this position the cam followers 34, 35 on the slide are in engagement with the cam surfaces 16, 66 on very rear end of each cam 15, 65. Therefore the pivot levers 11, 61 are in their maximum working position C.

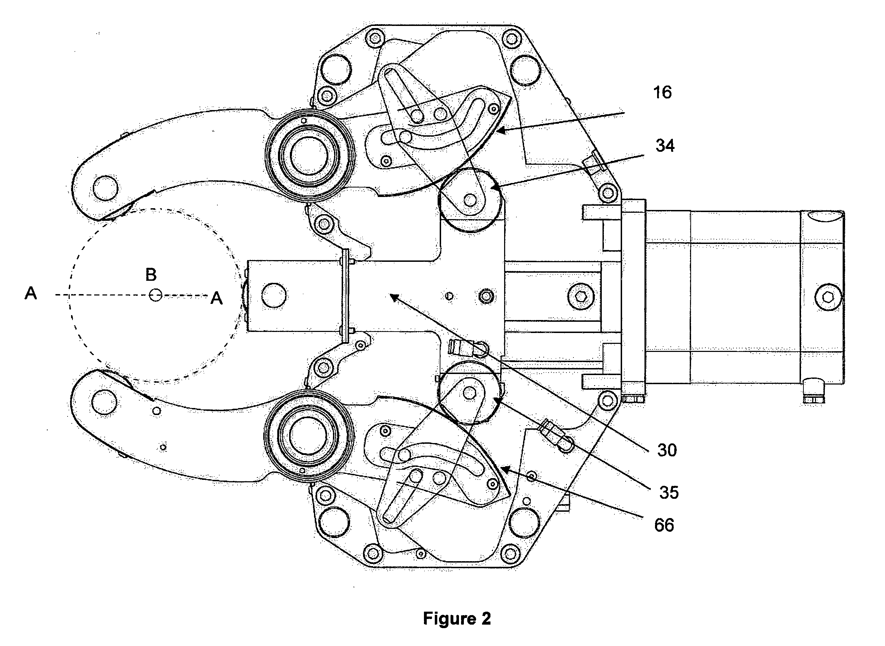

In figure 2, the slide 30 has been displaced further towards the centring point B. This movement causes the cam followers 34, 35 to roll on the cam surfaces 16, 66 towards the front end of the cam whereby the pivoting levers 10, 60 are forced to pivot towards the centring point B.

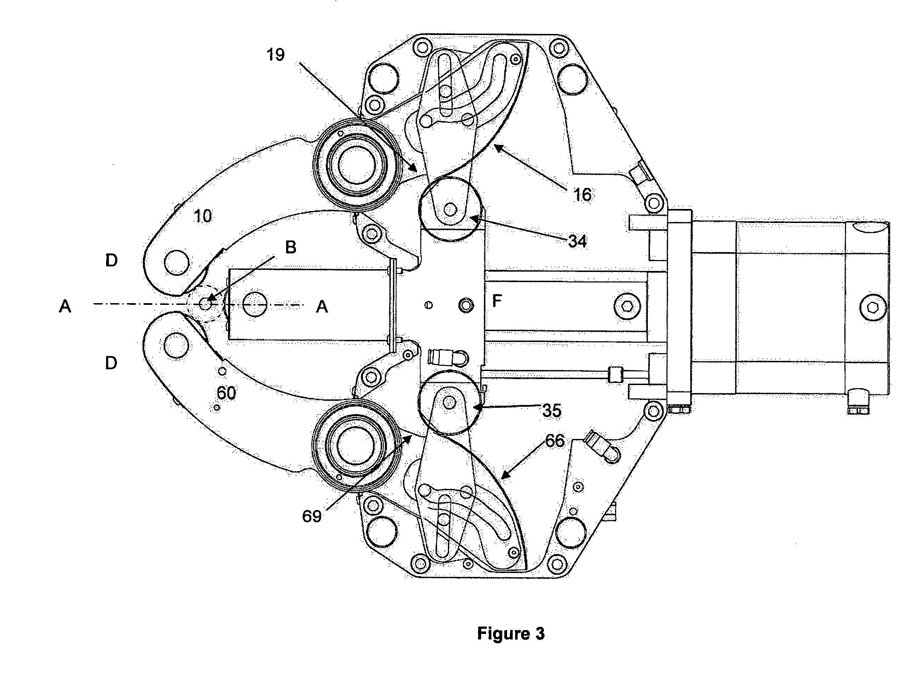

In figure 3, the slide has been displaced further towards the centring point B and is now in its forward working position F. The cam followers 34, 35 have been displaced over the cam surfaces 16, 66 of the cams to the front end 19, 69 of the cams and the levers are therefore in the minimum working position D.

The shape and extension of the cams in the present invention correspond principally to the shape and extension of the cams in the steady rest according to the document W08701320. This document, WO8701320 is referred to for a a detailed description of the co-operation between cams and cam followers explained, as well as the particulars of the force that is exerted by the support rollers onto the work piece.

Returning to figure 1.The rear portion 14 of the upper pivoting lever 10 comprises a guide groove 40 and a connection element 50, having a guide pin 53. The connection element couples the upper pivoting lever 10 to the slide 30. As is shown in figure 1 also the rear portion 64 of the lower pivoting lever 60 comprises a guide groove 80 and a connection element 70. In figures 1- 6 the connection element 50, 70 is depicted transparent in order to not obscure underlaying elements.

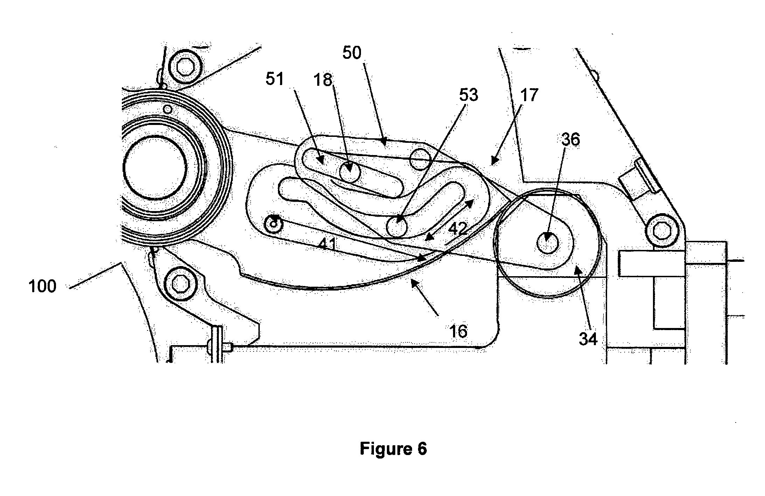

Figure 6 shows an enlarged view of the rear portion of the pivoting lever 10 in figure 1. The guide groove 40 comprises a rear section 42, which is designed such that the guide pin 53 (which will be explained later) comes into engagement with the inner surfaces of the groove when the slide 30 is moved from the rear working position G to the rearmost release position H. The pivoting lever 10 is thereby forced to perform a pivoting movement to the further open release position. The guide groove 40 further comprises a forward section 41 which is dimensioned and shaped so that the guide pin 53 follows this section of the guide groove during pivoting of the levers between a maximum and minimum working position without engaging the surfaces of the groove. Hence, the forward section 41 is designed such that the guide pin 53 follows the groove, without engagement, when the slide 30 is moved from the rear working position G to the forward working position F.

It should be appreciated that the guide groove may have different shapes and may extend differently in the rear section of the lever depending on the shape and extension of the cams. The shape of the groove also depends on the dimensions of other parts of the steady rest, such as the connection element and the slide. Therefore the exact form and extension of the guide groove must be determined for the application in which the steady rest is employed.

In the embodiment shown in figure 6, the forward section 41 of the guide groove 40 has a curved shape with it's convex side facing the cam surface 16. The rear section 42 of the guide groove extends linearly from the end of the forward section 41 of the groove towards the rear end 17 of the lever and is inclined upwards with respect to the forward section 41, i.e. in a direction facing away from the cam surface 16.

A stud 18 is fixed to the rear section 14 of the lever 11. The stud 18 is located on the side of the guide groove that faces away from the cam surface.

The connection element 50 has a kite-like shape i. e. it has two long sides which meet in a first corner and two shorter sides which meet in a second corner opposite to the first corner. A long and a short side meet in opposite third and fourth corners respectively. It is however obvious that the connection element could have other forms, for example rectangular or rhombic. A slit 51 for cooperating with the stud 18 extends from the second corner towards the centre of the connection element. The connection element further comprises a guide pin 53. The guide pin 53 is attached, e.g. by welding in one of the corners where a short side and a long side meet. The connection element 50 comprises a hole for attaching the connection element to the cam follower, i.e. to the axis of the cam follower roller. The hole is located in the corner opposite to the slit 51, i.e. in the corner between the long sides.

The connection element 50 couples the slide 30 to the pivoting lever 10. Hence, the first corner of the connection element 50 is pivotally attached to the slide 30, i.e. it is pivotally attached to the axis 36 of the cam follower roller 34. The stud 18 in the pivoting lever 10 is inserted into the slit 51. In operation the stud 18 is guided in the slit 51 and ensures that the coupling between connection element, guide pin 53, guide groove 40 and the slide 30 and lever 14 is stable and without play. The stud and the slit further helps to guide the motion of the guide pin 53 in the guide groove 40. The guide pin 53 is inserted into the guide groove 40 in the lever 10. When the connection element is coupled to slide and lever in this way the connection element 50 can pivot around the axis of the cam follower. The connection element can also pivot in the guide groove via the guide pin 53 and in the slit via the stud 18.

The arrangement of guide groove 40, guide pin 53 and the connection element 50 serves two purposes. Firstly, it provides a "yawning function" when the slide is moved from a rear working position in a direction away from the centring point to a rearmost position.

The "yawning function" of the steady rest will in the following be described with reference to figures 1, 4 and 5.

Figure 1, has been describe earlier and shows the steady rest in a maximum working position C. I this position, the slide 30 is in a rear working position G shown in figure 1 and the cam follower 34 is engaging the very end of the cam surface 16. The guide pin 53 is located at the end of the forward section 41 of the guide groove 40.

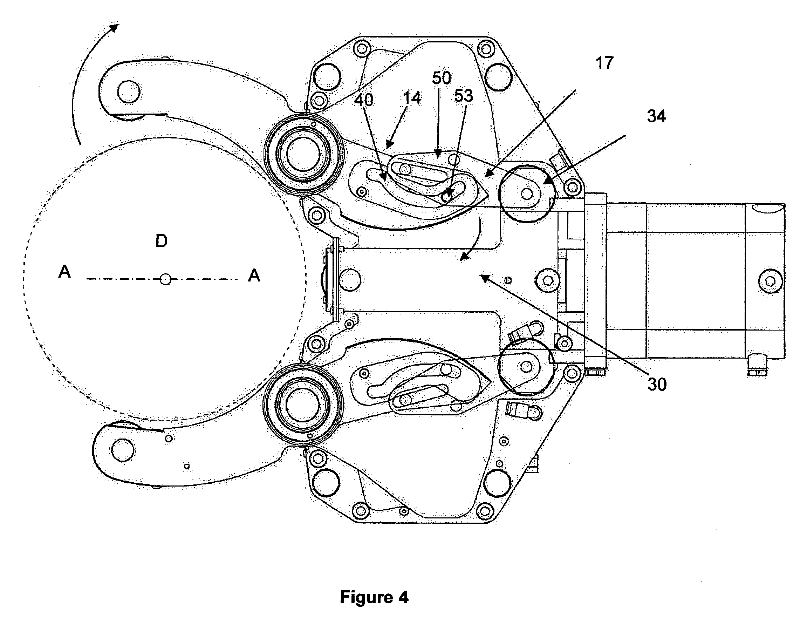

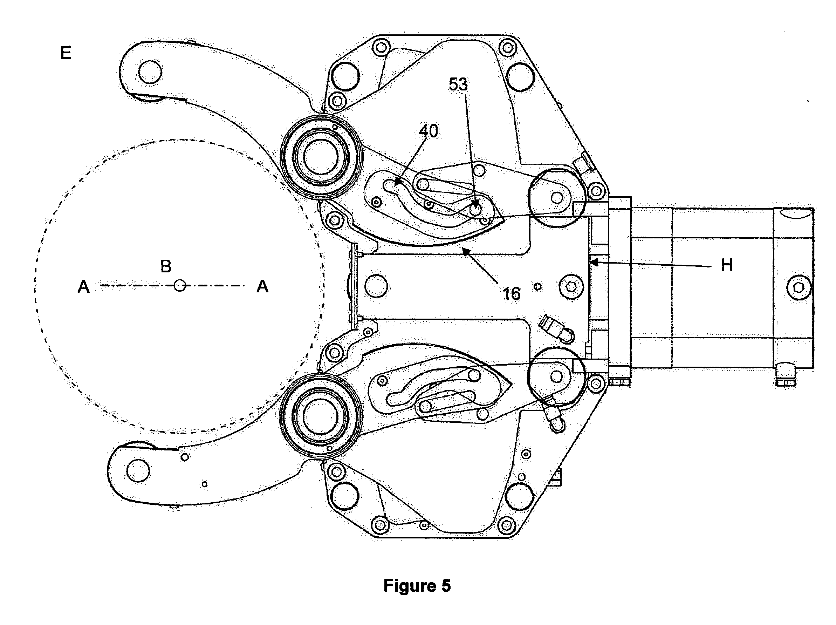

In order to swing the upper pivoting lever 10 to a further open release position, the slide is displaced linearly from the rear working position G, in a direction away from the centring point B, towards a rearmost release position H which is shown in figure 5. As the slide is moved linearly towards the rearmost release position H, (see figure 4 which shows the slide in a position between the rear working position G and the rearmost release position H), the cam follower 34 leaves the contact with the cam surface 16 and is moved outside the rear end 17 of the pivoting lever 10 so that the roller 34 is located behind the rear end 17 of the pivoting lever 10. Due to the coupling to the slide by the connection element 50, the guide pin 53 follows the guide groove 40 and enters the rear section 42 of the guide groove. Since the rear section 42 of the guide groove is inclined upwards away from the forward section 41 of the groove, the guide pin 53 comes into engagement with the side of the groove that is directed towards the cam surface and forces therefore the rear portion 14 of the pivoting lever 10 to swing downwards towards the slide 30. Since the cam follower roller 34 no longer blocks the space between the rear section of the lever and the slide 30 the rear portion 14 of the pivoting lever 10 can be pivoted down close to the slide 30.

The linear movement of the slide 30 away from the centring point B continues until the slide has reached its rearmost release position H, see figure 5. The guide pin 53 has now reached the end of the groove 40 and the lever has been pivoted to the further open release position E. As can be seen in figure 5, the cam surface 16 of the rear portion of pivoting lever 10 is very close to the slide 30.

In order to swing the upper lever from the further open release position E back to the maximum working position (and further towards the minimum working position D) a reverse movement is performed. Hence, starting from figure 5, The slide 30 is displaced from the rearmost position H towards the centring point B whereby the guide pin 53 again follows the rear section 42 of the guide groove 40. However, this time the guide pin 53 engages that side of the guide groove that is directed away from the cam surface 16. Therefore the rear end 14 of the pivoting lever 10 is forced to pivot upwards, away from the slide 30. When the slide reaches the rear working position G, the rear portion 14 of the lever has been pivoted upwards enough for the cam follower to engage the cam surface. The guide pin enters the forward section 42 of the groove 40 and is no longer in engagement with the guide groove, see figure 1.

As can be seen in figures 1 - 5, the guide groove 80 of the second pivoting lever 60 does not comprise an extended and inclined rear section for guiding the second lever to a further open position. Instead, the guide groove 80 in the second lever is shaped such the guide pin 73 follows the entire groove without engagement as the slide is moved between the rear working position H and the rearmost release position G. Therefore, both the upper and lower cam followers 34, 35 leaves and reaches the upper and lower cam surface 16, 66 simultaneously.

The second pivoting lever 60 could of course be provide with a guide groove that is identical to the guide groove in the first lever, so that the also the lower lever can be moved from the maximum working position to a further open release position F.

A second purpose of the arrangement of guide groove, guide pin and connection element is to prevent the levers from performing an accidental pivotal movement.

Therefore, as described with reference to figure 6, the guide groove 40 in the upper pivoting lever 10 extends from the rear section 42 into a forward section 41 towards the front end 19 of the rear section 14 of the pivoting lever 10. As described earlier, the forward section 41 of the guide groove is shaped such that, when the cam follower 34 rolls over the cam surface 16, the guide pin 53 follows in the centre of the guide groove 41 without influencing the contact between cam surface and cam follower, since the exact centring of the work piece otherwise could be ruined. Hence, the guide pin follows the guide groove during movement of the slide from the rear working position to the forward working position, without engaging the inner surface of the guide groove.

In order to ensure that no engagement occurs between the guide pin 53 and the guide groove 40 when the cam followers are in contact with the camsurfaces, the tolerance between the guide pin and the groove should preferably be beween 0.3 - 0.5 mm.

The arrangement above provides an advantage in a situation in which the levers are not in direct contact with the work piece, for example due to that the work piece has been removed from the steady rest for measurements, or during loading/ unloading of the steady rest. If the levers would start to pivot inwards by the own weight or some external force the guide pin immediatly comes in contact with the surface of the groove and prevents all further pivotal movement of the levers. The levers are of course also secured in the further open release position E by interaction between guide pin and the end of the guide groove.

In the described embodiment the guide grooves 40, 80 are formed into separate inserts 100, for example by milling. Figure 6 shows the outlines of an insert 100. The inserts may for example be suitable formed pieces of steel, sintered hard metall, plastic or ceramic. To accommodate the inserts, the rear portion of the levers are provided with corresponding recesses into which the inserts can be inserted. In figures 1-6, the inserts are inserted into the corresponding recesses which therefore are not visible. The inserts are preferably removable attached in the recesses e.g. by form fitting or by screws.

Instead of inserts, the grooves may also be formed in pre-manufactured pieces of steel, sintered hard metall, plastic or ceramic material. The pieces may be attached directly onto the levers e. g. with screws. This omits the need of making recesses into the levers.

An advantage with the use of pre-manufactured pieces/inserts that are provided with guide grooves is that only one type of lever needs to be manufactured. The levers can then be adapted to the application in question by attaching the pieces or inserts with specifically shaped grooves to the respective levers. This reduces the manufacturing costs of the steady rest and provides very high flexibility since the steady rest easily can be adapted for particulat applications.

It is of course also possible to form the guide grooves, e.g. by milling, directly into the pivoting levers 10, 60.

## Claims

1. A self-centring steady rest (10) comprising:
- a first and a second pivoting lever (10, 60) that are arranged in symmetry relative a plane A - A passing through a centring point B, wherein each pivoting lever (10, 60) is divided by a pivot point (13, 63) into a forward portion (11, 61) having a support means (12, 62) for contacting a work piece and a rear portion (14, 64) comprising a cam (15, 65) having a cam surface (16, 66);
- a slide (30) that is linearly displaceable in the plane A - A relative the centring point B, wherein said slide (30) has a forward portion (31), having a support means (32) for contacting a work piece and a rear portion (33) comprising cam followers (34, 35);
- wherein said cams (15, 65) and said cam followers (34, 35) couples the displacement of the slide (30) to the pivotal movement of the pivoting levers (10, 60) between a maximum working position C and a minimum working position D so that the support means (12, 62, 32) on the first and second pivoting levers (10, 60) and the slide (30) always are at the same radial distance from the centring point B; wherein at least one pivoting lever (10, 60) comprises a first guide groove (40, 80) wherein said at least one pivoting lever is coupled to the slide (30) by a connection means (50, 70) which comprises a guide pin (53, 73) that is guided in the guide groove (40, 80), **characterized in that** said connection means (50, 70) and said guide grove (40, 80) are designed such that said at least one pivoting lever (10, 60) is pivoted from the maximum working position C to a further open release position E when the slide (30) is moved from a rear working position G to a rearmost release position H and such that said at least one pivoting lever (10, 60) is pivoted from said further open release position E to said maximum working position C when said slide (30) is moved from the rearmost release position H to said rear working position G, wherein the connection element (50, 70) is arranged such that, when the slide (30) moved from said rear working position G to said rearmost release position H, the cam follower (34, 35) is distant from the rear end (19, 69) of said at least one pivoting lever (10, 60) to enable the rear portion (14, 64) of said at least one pivoting lever (10, 60) to pivot past said cam follower (34, 35) towards the slide (30).

2. Steady rest according to claim 1, wherein the guide groove (40, 80) comprises a rear section (42, 82) which is adapted such that the guide pin (53, 73) is in engagement with the guided groove (42, 82) when the slide (30) is moved between said rear working position G and said rearmost release position H.

3. Steady rest according to claim 1 or 2, wherein the guide groove (40, 80) comprises a forward section (41, 80) which is adapted such that the guide pin (53, 73) follows the forward section (41, 80) without engaging the guide groove when the slide (30) is moved between said rear working position G and a forward working position H.

4. Steady rest according to any of claims 1 - 3, wherein said second pivoting lever (60) comprises a guide groove (80) which is adapted such that the guide pin (73) follows the guide groove (80) without engaging the guide groove when the slide (30) is moved between said rear working position G and a forward working position H.

5. Steady rest according to claims 1-4, wherein the second pivoting lever comprises a guide groove (80) which comprises a rear section (82) which is adapted such that when the the guide pin (73) is in engagement with the rear section (82) of the groove when the slide (30) is moved between said rear working position G and a rearmost release position H.

6. Steady rest (10) according to any of claims 1-5, comprising at least one pre-manufactured piece (100), comprising a guide groove (40, 80).

7. Steady rest (10) according to claim 6, wherein said at least one pre-manufactured piece (100) is attached to the pivoting lever (10, 60).

8. The steady rest (10) according to claim 6, wherein said at least one pre-manufactured piece is an insert (100), wherein said at least one pivoting lever (10, 60) comprises a recess adapted for receiving said insert.

9. Steady rest (10) according to any of claims 1 - 5, wherein said guide groove (40, 80) is formed directly into the said at least one pivoting levers (10, 60).

## Patentansprüche

1. Selbstzentrierende Lünette (10), umfassend:
- einen ersten und einen zweiten Schwenkhebel (10, 60), die symmetrisch im Verhältnis zur Ebene A - A angeordnet sind, durch einen Zentrierpunkt B hindurchgehend, wobei jeder Schwenkhebel (10, 60) durch einen Schwenkpunkt (13, 63) in einen vorderen Teil (11, 61) aufgeteilt ist, aufweisend ein Stützorgan (12, 62) zum Kontaktieren eines Arbeitsstücks und einen hinteren Teil (14, 64), umfassend eine Nocke (15, 65) mit einer Nockenfläche (16, 66);
- einen Gleiter (30), der in der Ebene A - A im Verhältnis zum Zentrierpunkt B linear verschiebbar ist, wobei der Gleiter (30) einen vorderen Teil (31) aufweist, aufweisend ein Stützorgan (32) zum Kontaktieren eines Arbeitsstücks und einen hinteren Teil (33), umfassend Nockenmitnehmer (34, 35);
- wobei die Nocken (15, 65) und die Nockenmitnehmer (34, 35) die Verschiebung des Gleiters (30) mit der Schwenkbewegung der Schwenkhebel (10, 60) zwischen einer maximalen Arbeitsposition C und einer minimalen Arbeitsposition D kuppeln, so dass sich die Stützorgane (12, 62, 32) am ersten und zweiten Schwenkhebel (10, 60) und der Gleiter (30) immer im gleichen radialen Abstand zum Zentrierpunkt B befinden;
wobei zumindest ein Schwenkhebel (10, 60) eine erste Führungsnut (40, 80) umfasst, wobei der zumindest eine Schwenkhebel mit dem Gleiter (30) durch ein Verbindungsmittel (50, 70) gekuppelt ist, welches einen Führungsstift (53, 73) umfasst, der in der Führungsnut (40, 80) geführt ist,
**dadurch gekennzeichnet, dass** das Verbindungsmittel (50, 70) und die Führungsnut (40, 80) so ausgebildet sind, dass der zumindest eine Schwenkhebel (10, 60) von der maximalen Arbeitsposition C zu einer weiteren offenen Freigabeposition E geschwenkt wird, wenn der Gleiter (30) von einer hinteren Arbeitsposition G zu einer hintersten Freigabeposition H bewegt wird, und auf eine solche Weise, dass der zumindest eine Schwenkhebel (10, 60) von der weiteren offenen Freigabeposition E zur maximalen Arbeitsposition C geschwenkt wird, wenn der Gleiter (30) von der hintersten Freigabeposition H zur hinteren Arbeitsposition G bewegt wird, wobei das Verbindungselement (50, 70) so ausgelegt ist, dass, wenn der Gleiter (30) von der hinteren Arbeitsposition G zur hintersten Freigabeposition H bewegt wird, der Nockenmitnehmer (34, 35) vom hinteren Ende (19, 69) des zumindest einen Schwenkhebels (10, 60) entfernt ist, um zu ermöglichen, das der hintere Teil (14, 64) des zumindest einen Schwenkhebels (10, 60) am Nockenmitnehmer (34, 35) in Richtung des Gleiters (30) vorbeischwenkt.

2. Lünette nach Anspruch 1, wobei die Führungsnut (40, 80) einen hinteren Abschnitt (42, 82) umfasst, der so ausgebildet ist, dass der Führungsstift (53, 73) mit der geführten Nut (42, 82) in Eingriff steht, wenn der Gleiter (30) zwischen der hinteren Arbeitsposition G und der hintersten Freigabeposition H bewegt wird.

3. Lünette nach Anspruch 1 oder 2, wobei die Führungsnut (40, 80) einen vorderen Abschnitt (41, 80) umfasst, der so ausgebildet ist, dass der Führungsstift (53, 73) dem vorderen Abschnitt (41, 80) folgt, ohne mit der Führungsnut in Eingriff zu gehen, wenn der Gleiter (30) zwischen der hinteren Arbeitsposition G und einer vorderen Arbeitsposition H bewegt wird.

4. Lünette nach einem der Ansprüche 1 - 3, wobei der zweite Schwenkhebel (60) eine Führungsnut (80) umfasst, die so ausgebildet ist, dass der Führungsstift (73) der Führungsnut (80) folgt, ohne mit der Führungsnut in Eingriff zu gehen, wenn der Gleiter (30) zwischen der hinteren Arbeitsposition G und einer vorderen Arbeitsposition H bewegt wird.

5. Lünette nach den Ansprüchen 1-4, wobei der zweite Schwenkhebel eine Führungsnut (80) umfasst, welche einen hinteren Abschnitt (82) umfasst, der so ausgebildet ist, dass, wenn der Führungsstift (73) mit dem hinteren Abschnitt (82) der Nut in Eingriff steht, wenn der Gleiter (30) zwischen der hinteren Arbeitsposition G und einer hintersten Freigabeposition H bewegt wird.

6. Lünette (10) nach einem der Ansprüche 1-5, umfassend zumindest ein vorgefertigtes Stück (100), umfassend eine Führungsnut (40, 80).

7. Lünette (10) nach Anspruch 6, wobei das zumindest eine vorgefertigte Stück (100) am Schwenkhebel (10, 60) befestigt ist.

8. Lünette (10) nach Anspruch 6, wobei das zumindest eine vorgefertigte Stück ein Einsatz (100) ist, wobei der zumindest eine Schwenkhebel (10, 60) eine zum Empfangen des Einsatzes ausgebildete Aussparung umfasst.

9. Lünette (10) nach einem der Ansprüche 1-5, wobei die Führungsnut (40, 80) in dem zumindest einen Schwenkhebel (10, 60) direkt eingeformt ist.

## Revendications

1. Lunette d'auto-centrage (10) comprenant:
- un premier et un deuxième levier pivotant (10, 60) qui sont disposés en symétrie par rapport à un plan A - A passant par un point de centrage B, chaque levier pivotant (10, 60) étant divisé par un point de pivotement (13, 63) dans une partie avant (11, 61) ayant un moyen de support (12, 62) pour la mise en contact d'une pièce à usiner et une partie arrière (14, 64) comprenant une came (15, 65) ayant une surface de came (16, 66);
- un coulisseau (30) qui peut se déplacer linéairement dans le plan A - A par rapport au point de centrage B, ledit coulisseau (30) ayant une partie avant (31), ayant un moyen de support (32) pour la mise en contact d'une pièce à usiner et une partie arrière (33) comprenant des suiveurs de came (34, 35);
- lesdites cames (15, 65) et lesdits suiveurs de came (34, 35) accouplent le déplacement du coulisseau (30) au mouvement à pivotement des leviers pivotants (10, 60) entre une position de travail maximale C et une position de travail minimale D si bien que les moyens de support (12, 62, 32) sur les premier et deuxième leviers pivotants (10, 60) et le coulisseau (30) sont toujours à la même distance radiale à partir du point de centrage B;
au moins un levier pivotant (10, 60) comprenant une première rainure de guidage (40, 80), ledit au moins un levier pivotant étant accouplé au coulisseau (30) par un moyen de liaison (50, 70) qui comprend une broche de guidage (53, 73) qui est guidée dans la rainure de guidage (40, 80),
**caractérisée en ce que**
ledit moyen de liaison (50, 70) et ladite rainure de guidage (40, 80) sont conçus si bien que ledit au moins un levier pivotant (10, 60) est pivoté à partir de la position de travail maximale C à une position ouverte de libération supplémentaire E, lorsque le coulisseau (30) est déplacé à partir d'une position de travail arrière G à une position de libération la plus reculée H, et si bien que ledit au moins un levier pivotant (10, 60) est pivoté autour de ladite position ouverte de libération supplémentaire E à ladite position de travail maximale C, lorsque ledit coulisseau (30) est déplacé à partir de la position de libération la plus reculée H à ladite position de travail arrière G,
l'élément de liaison (50, 70) est agencé si bien que lorsque le coulisseau (30) est déplacé à partir de ladite position de travail arrière G à ladite position de libération la plus reculée H, le suiveur de came (34, 35) est distant de l'extrémité arrière (19, 69) dudit au moins un levier pivotant (10, 60) pour permettre à la partie arrière (14, 64) dudit au moins un levier pivotant (10, 60) de pivoter au-delà dudit suiveur de came (34, 35) en direction du coulisseau (30).

2. Lunette selon la revendication 1, dans laquelle ladite rainure de guidage (40, 80) comprend une section arrière (42, 82) qui est adaptée si bien que la broche de guidage (53, 73) est en prise avec la rainure guidée (42, 82) lorsque le coulisseau (30) est déplacé entre ladite position de travail arrière G et ladite position de libération la plus reculée H.

3. Lunette selon la revendication 1 ou 2, dans laquelle la rainure de guidage (40, 80) comprend une section avant (41, 80) qui est adaptée si bien que la broche de guidage (53, 73) suit la section avant (41, 80) sans engager la rainure de guidage lorsque le coulisseau (30) est déplacé entre ladite position de travail position arrière G et une position de travail avant H.

4. Lunette selon l'une quelconque des revendications 1 à 3, dans laquelle ledit deuxième levier pivotant (60) comprend une rainure de guidage (80) qui est adaptée si bien que la broche de guidage (73) suit la rainure de guidage (80) sans engager la rainure de guidage lorsque le coulisseau (30) est déplacé entre ladite position de travail arrière G et une position de travail avant H.

5. Lunette selon l'une quelconque des revendications 1 à 4, dans laquelle le deuxième levier pivotant comprend une rainure de guidage (80) qui comprend une section arrière (82) qui est adaptée si bien que lorsque la broche de guidage (73) est en prise avec la section arrière (82) de la rainure lorsque le coulisseau (30) est déplacé entre ladite position de travail arrière G et une position de travail avant H.

6. Lunette (10) selon l'une quelconque des revendications 1 à 5, comprenant au moins une pièce pré-usinée (100), comprenant une rainure de guidage (40, 80).

7. Lunette (10) selon la revendication 6, dans laquelle ladite au moins une pièce pré-usinée (100) est attachée au levier pivotant (10, 60).

8. Lunette (10) selon la revendication 6, dans laquelle ladite au moins une pièce pré-usinée est un apport (100), ledit au moins un levier pivotant (10, 60) comprenant un évidement adapté pour recevoir ledit apport.

9. Lunette (10) selon l'une quelconque des revendications 1 à 5, dans laquelle ladite rainure de guidage (40, 80) est formée directement dans ledit au moins un levier pivotant (10, 60).
